# EUROPEAN PATENT APPLICATION

(11) **EP 4 651 080 A1**
(43) Date of publication of application: **19.11.2025**
(21) Application number: 24175334.2
(22) Date of filing: 13.05.2024
(51) Int. Cl.: G06T 7/33

(54) **PROVIDING AN IMAGE REPRESENTATION OF AN ANATOMICAL REGION**

(71) Applicant: Koninklijke Philips N.V., 5656 AG Eindhoven (NL)
(72) Inventor: GRASS, Michael, Eindhoven (NL); KOEHLER, Thomas, Eindhoven (NL)
(74) Representative: Philips Intellectual Property & Standards

(57) **Abstract**

A computer-implemented method of providing an image representation of an anatomical region, is provided. The method includes generating, from CT data, first and second image representations (130₁, 130₂) corresponding to respective first and second portions of an anatomical region (120). The first and the second image representations (130i, 130₂) comprise an overlap region (130₁₋₂). The method includes mutually registering the first and the second image representations (130₁, 130₂) based on corresponding image features (140, 140') within the overlap region (130₁₋₂) to provide a combined image representation (130^{C}) of the anatomical region (120). The method includes outputting the combined image representation (130^{C}). The operation of mutually registering the first and the second image representations (130₁, 130₂) includes relaxing a registration constraint between the first and second image representations (130₁, 130₂) within a portion of the overlap region corresponding to an image artifact (130^{A}₁₋₂).

## Description

### TECHNICAL FIELD

The present disclosure relates to providing an image representation of an anatomical region. A computer-implemented method, a computer program product, and a system, are disclosed.

### BACKGROUND

In a step-and-shoot imaging procedure, CT data is acquired from each of multiple positions of an imaging system with respect to an anatomical region. In each position, or "step", CT data is acquired from a different portion of the anatomical region. Adjacent steps are arranged such that they both acquire CT data from an "overlap region"; i.e. a portion of the anatomical region that is common to both steps. Separate images are then reconstructed from the CT data that is acquired from each step, and the images that are acquired from adjacent steps are mutually registered based on corresponding image features within their overlap region in order to provide a combined image representation of the anatomical region. In other imaging procedures too, including for instance helical CT imaging procedures, CT data that is acquired from different positions of an imaging system with respect to an anatomical region is subsequently mutually registered to provide a combined image representation of an anatomical region.

The mutual registration operation described above benefits from high image quality within the overlap regions. However, reconstructed images sometimes include image artifacts. The origins of these artifacts are varied. They may, for instance, originate from the presence of objects that are formed from dense materials such as metal, or bone, in the anatomical region, motion of the anatomical region over the period in which the CT data is acquired, cone beam artifacts, beam hardening artefacts, or they may have other origins. These artifacts can appear differently in the images that are reconstructed for adjacent steps. This is due to differences in the positioning of the imaging system with respect to the anatomical region in adjacent steps, motion-induced changes within the anatomical region between adjacent steps, and also other factors. For instance, in a cardiac CT imaging procedure, the CT data that is acquired from adjacent steps corresponds to different heartbeats. The motion of the heart between the adjacent steps, and also the change in the position of the imaging system with respect to the heart between adjacent steps, and also the presence of dense objects such as metal, and bone, in the vicinity of the heart, can give rise to image artifacts that appear differently in the images that are generated from adjacent steps. If these artifacts occur in the overlap regions, they hamper the registration of the images and can result in discontinuities in the combined image at the interfaces between the registered images.

Various methods have been developed for reducing such discontinuities. For instance, metal artifacts are typically corrected using so-called "second path" correction method. However, this method can introduce an unacceptable delay to an already-complex image reconstruction process and is also susceptible to inconsistencies due to motion.

Thus, there remains a need for improved techniques for reducing discontinuities between mutually-registered CT images that are acquired from different positions of an imaging system with respect to an anatomical region, such as those acquired during step-and-shoot CT imaging procedures, and during helical CT imaging procedures.

### SUMMARY

According to one aspect of the present disclosure, a computer-implemented method of providing an image representation of an anatomical region, is provided. The method includes:
receiving CT data representing the anatomical region;
generating, from the CT data, first and second image representations corresponding to respective first and second portions of the anatomical region, wherein the first and the second image representations comprise an overlap region;
mutually registering the first and the second image representations based on corresponding image features within the overlap region to provide a combined image representation of the anatomical region; and
outputting the combined image representation; and
wherein the mutually registering comprises relaxing a registration constraint between the first and second image representations within a portion of the overlap region corresponding to an image artifact.

In the above method, the operation of mutually registering the first and the second image representations includes relaxing a registration constraint between the first and second image representations within a portion of the overlap region corresponding to an image artifact. The consequence of this is that the registration places reduced emphasis on the portion of the overlap region that includes the image artifact. Since the image artifact can appear differently in the first and second image representations, the result of this reduced emphasis is to reduce the distorting effect of the image artifact on the combined image. This has the effect of reducing discontinuities in the combined image at the interface between the image representations.

Further aspects, features, and advantages of the present disclosure will become apparent from the following description of examples, which is made with reference to the accompanying drawings.

### BRIEF DESCRIPTION OF THE DRAWINGS

Fig. 1 is a flowchart illustrating an example of a computer-implemented method of providing an image representation of an anatomical region, in accordance with some aspects of the present disclosure.
Fig. 2 is a schematic diagram illustrating an example of a system 200 for providing an image representation of an anatomical region 120, in accordance with some aspects of the present disclosure.
Fig. 3 is a schematic diagram illustrating a) an example of the acquisition of CT data representing a first portion 120₁ of an anatomical region during a first step 150₁ of a step-and-shoot imaging procedure, b) an example of the acquisition of CT data representing a second portion 120₂ of an anatomical region during a second step 150₁ of the step-and-shoot imaging procedure, and c) an example of an overlap region 120₁₋₂ between the first and second portions 120₁, 120₂ of the anatomical region, in accordance with some aspects of the present disclosure.
Fig. 4 is a cardiac CT image including an example of metal artifacts 160₁, 160z associated with an artificial cardiac valve, in accordance with some aspects of the present disclosure.
Fig. 5 is a cardiac CT image including an example of metal artifacts 170₁, 170₂ associated with wire stitches, in accordance with some aspects of the present disclosure.
Fig. 6 is a cardiac CT image including an example of a metal artifact 180 associated with a cardiac pacemaker, in accordance with some aspects of the present disclosure.
Fig. 7 is a schematic diagram illustrating first and second image representations 130₁, 130₂, corresponding to respective first and second portions of an anatomical region, and an overlap region 130₁₋₂ including an image artifact 130^{A}₁₋₂, in accordance with some aspects of the present disclosure.

### DETAILED DESCRIPTION

Examples of the present disclosure are provided with reference to the following description and Figures. In this description, for the purposes of explanation, numerous specific details of certain examples are set forth. Reference in the specification to "an example", "an implementation" or similar language means that a feature, structure, or characteristic described in connection with the example is included in at least that one example. It is also to be appreciated that features described in relation to one example may also be used in another example, and that all features are not necessarily duplicated in each example for the sake of brevity. For instance, features described in relation to a computer-implemented method, may be implemented in a computer program product, and in a system, in a corresponding manner.

In the following description, reference is made to examples of a computer-implemented method of providing an image representation of an anatomical region. In some examples, the anatomical region is a portion of a heart of a subject. However, it is to be appreciated that the method may alternatively be used to provide image representations of other types of anatomical regions. Thus, the anatomical region may alternatively be a portion of a lung, or another portion of the anatomy.

It is noted that the computer-implemented methods disclosed herein may be provided as a non-transitory computer-readable storage medium including computer-readable instructions stored thereon, which, when executed by at least one processor, cause the at least one processor to perform the method. In other words, the computer-implemented methods may be implemented in a computer program product. The computer program product can be provided by dedicated hardware, or hardware capable of running the software in association with appropriate software. When provided by a processor, the functions of the method features can be provided by a single dedicated processor, or by a single shared processor, or by a plurality of individual processors, some of which can be shared. The functions of one or more of the method features may for instance be provided by processors that are shared within a networked processing architecture such as a client/server architecture, a peer-to-peer architecture, the Internet, or the Cloud.

The explicit use of the terms "processor" or "controller" should not be interpreted as exclusively referring to hardware capable of running software, and can implicitly include, but is not limited to, digital signal processor "DSP" hardware, read only memory "ROM" for storing software, random access memory "RAM", a non-volatile storage device, and the like. Furthermore, examples of the present disclosure can take the form of a computer program product accessible from a computer-usable storage medium, or a computer-readable storage medium, the computer program product providing program code for use by or in connection with a computer or any instruction execution system. For the purposes of this description, a computer-usable storage medium or a computer readable storage medium can be any apparatus that can comprise, store, communicate, propagate, or transport a program for use by or in connection with an instruction execution system, apparatus, or device. The medium can be an electronic, magnetic, optical, electromagnetic, infrared, or a semiconductor system or device or propagation medium. Examples of computer-readable media include semiconductor or solid-state memories, magnetic tape, removable computer disks, random access memory "RAM", read-only memory "ROM", rigid magnetic disks and optical disks. Current examples of optical disks include compact disk-read only memory "CD-ROM", compact disk-read/write "CD-R/W", Blu-Ray^{™} and DVD.

It is also noted that some operations that are described as being performed in the computer-implemented methods disclosed herein may be implemented using artificial intelligence techniques. Suitable techniques may include machine learning techniques, deep learning techniques, and neural networks. For instance, one or more neural networks, may be trained in a supervised, or in some cases unsupervised, manner, to implement the operations performed in the computer-implemented methods disclosed herein.

As mentioned above, there remains a need for improved techniques for reducing discontinuities between mutually-registered CT images that are acquired from different positions of an imaging system with respect to an anatomical region, such as those acquired during step-and-shoot CT imaging procedures, and during helical CT imaging procedures.

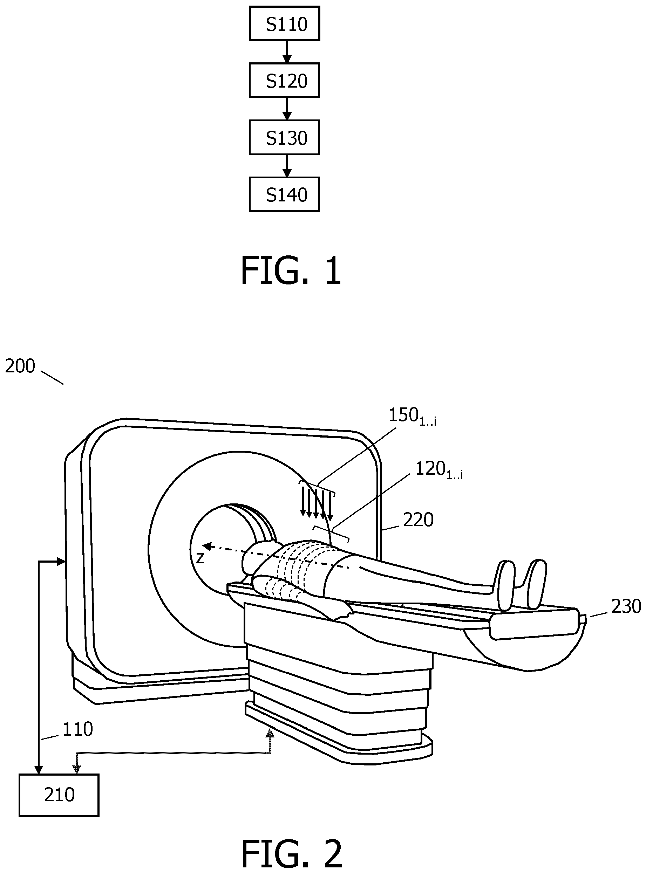

Fig. 1 is a flowchart illustrating an example of a computer-implemented method of providing an image representation of an anatomical region, in accordance with some aspects of the present disclosure. Fig. 2 is a schematic diagram illustrating an example of a system 200 for providing an image representation of an anatomical region 120, in accordance with some aspects of the present disclosure. It is noted that operations that are described in relation to the method illustrated in Fig. 1, may also be performed by the one or more processors 210 of the system 200 illustrated in Fig. 2. Likewise, operations that are described as being performed by the one or more processors 210 of the system 200 illustrated in Fig. 2, may also be performed in the method described with reference to Fig. 1. With reference to Fig. 1, and Fig. 2, the computer-implemented method of providing an image representation of an anatomical region, includes:
receiving S110 CT data 110 representing the anatomical region 120;
generating S120, from the CT data 110, first and second image representations 130₁, 130₂ corresponding to respective first and second portions 120₁, 120₂ of the anatomical region 120, wherein the first and the second image representations 130₁, 130₂ comprise an overlap region 130₁₋₂;
mutually registering S130 the first and the second image representations 130₁, 130₂ based on corresponding image features 140, 140' within the overlap region 130₁₋₂ to provide a combined image representation 130^{C} of the anatomical region 120; and
outputting S140 the combined image representation 130^{C}; and
wherein the mutually registering S130 comprises relaxing a registration constraint between the first and second image representations 130₁, 130₂ within a portion of the overlap region corresponding to an image artifact 130^{A}₁₋₂.

In the above method, the operation of mutually registering the first and the second image representations includes relaxing a registration constraint between the first and second image representations within a portion of the overlap region corresponding to an image artifact. The consequence of this is that the registration places reduced emphasis on the portion of the overlap region that includes the image artifact. Since the image artifact can appear differently in the first and second image representations, the result of this reduced emphasis is to reduce the distorting effect of the image artifact on the combined image. This has the effect of reducing discontinuities in the combined image at the interface between the image representations.

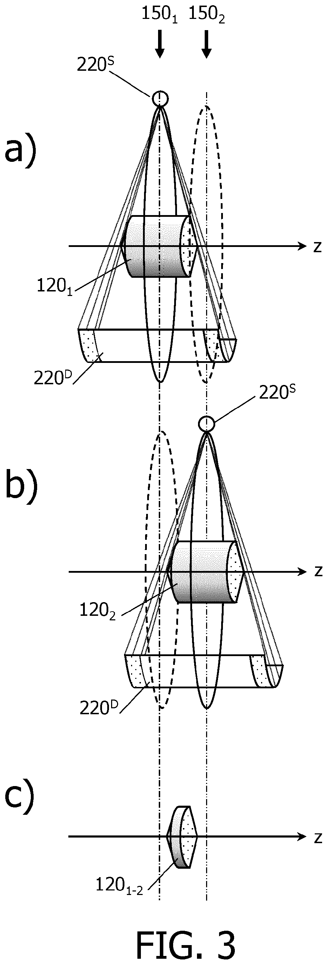

In order to illustrate the issue addressed by the above method, a step-and-shoot imaging procedure is now described with reference to Fig. 3 - Fig. 6. As mentioned above, in a step-and-shoot imaging procedure, CT data is acquired from each of multiple positions of an imaging system with respect to an anatomical region. In each position, or "step", CT data is acquired from a different portion of the anatomical region. Fig. 3 is a schematic diagram illustrating a) an example of the acquisition of CT data representing a first portion 120₁ of an anatomical region during a first step 150₁ of a step-and-shoot imaging procedure, b) an example of the acquisition of CT data representing a second portion 120₂ of an anatomical region during a second step 150₁ of the step-and-shoot imaging procedure, and c) an example of an overlap region 120₁₋₂ between the first and second portions 120₁, 120₂ of the anatomical region, in accordance with some aspects of the present disclosure. In the example illustrated in Fig. 3, an X-ray source 220^{s} and an X-ray detector 220^{s}, are used to acquire CT data in each of the steps 150₁ and 150₂ by, at each step, rotating the X-ray source and X-ray detector around an imaging axis, z. The imaging axis, z, in Fig. 3, corresponds to the imaging axis, z, in the system 200 illustrated in Fig. 2. As illustrated in Fig. 2, an anatomical region 120 of a subject, such as a subject's heart, may be positioned along the imaging axis, z, in order to acquire CT data representing the subject's heart. The steps 150₁ and 150₂ illustrated in Fig. 2 and Fig. 3 are arranged such that adjacent steps both acquire CT data from an "overlap region"; i.e. a portion of the anatomical region that is common to both steps. An example of the overlap region 120₁₋₂ for the steps 150₁ and 150₂ is illustrated in Fig. 3c.

With continued reference to Fig. 3, separate images are then reconstructed from the CT data that is acquired from the steps 150₁, and 150₂, and these images are then mutually registered based on corresponding image features within their overlap region 120₁₋₂ in order to provide a combined image representation of the anatomical region. However, as mentioned above, reconstructed images sometimes include image artifacts. The origins of these artifacts are varied. They may, for instance, originate from the presence of objects that are formed from dense materials such as metal, or bone, in the anatomical region, motion of the anatomical region over the period in which the CT data is acquired, cone beam artifacts, beam hardening artefacts, or they may have other origins. These artifacts can appear differently in the images that are reconstructed for adjacent steps. This is due to differences in the positioning of the imaging system with respect to the anatomical region in adjacent steps, motion-induced changes within the anatomical region between adjacent steps, and also other factors. If these artifacts occur in the overlap regions, they hamper the registration of the images and can result in discontinuities in the combined image at the interfaces between the registered images.

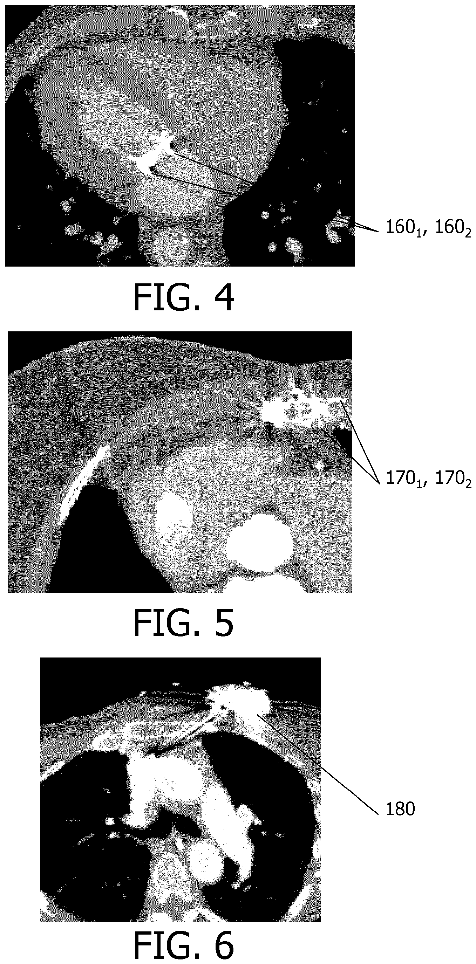

Fig. 4 - Fig. 6 illustrate various examples of image artifacts that may occur in reconstructed CT images. Fig. 4 is a cardiac CT image including an example of metal artifacts 160₁, 160z associated with an artificial cardiac valve, in accordance with some aspects of the present disclosure. Fig. 5 is a cardiac CT image including an example of metal artifacts 170₁, 170₂ associated with wire stitches, in accordance with some aspects of the present disclosure. Fig. 6 is a cardiac CT image including an example of a metal artifact 180 associated with a cardiac pacemaker, in accordance with some aspects of the present disclosure. As may be appreciated, if image artifacts such as those illustrated in Fig. 4 - Fig. 6 occur in the overlap region 120₁₋₂ illustrated in Fig. 3, differences in the artifacts between adjacent images that arise as a result of differences in the positioning of the imaging system with respect to the anatomical region in adjacent steps, motion-induced changes within the anatomical region between adjacent steps, and also other factors, can hamper the registration of the images and result in discontinuities in the combined image at the interfaces between the registered images.

The operations that are performed in the method illustrated in Fig. 1, are described below.

Referring initially to the operation S110, in this operation, CT data 110 is received. The CT data represents an anatomical region 120.

In general, the CT data 110 that is received in the operation S110 may represent any anatomical region. The CT data 110 may represent a portion of the heart, a portion of the lung, or a portion of another anatomical region, for example. In general, the CT data 110 may be raw data, i.e. data that has not yet been reconstructed into a volumetric, i.e. 3D, image. The CT data 110 may be generated by a (spectral) CT imaging system, or, as described in more below, it may be generated by rotating, or stepping the X-ray source and X-ray detector of a (spectral) X-ray projection imaging system around the anatomical region.

A CT imaging system generates CT data by rotating, or stepping, an X-ray source-detector arrangement around an anatomical region and acquiring X-ray attenuation data for the anatomical region from multiple rotational angles with respect to the anatomical region. The CT data may be used to reconstruct a 3D image of the anatomical region. The CT data may therefore be referred-to as volumetric data. Examples of CT imaging systems that may be used to generate the CT data 110 include cone beam CT imaging systems, photon counting CT imaging systems, dark-field CT imaging systems, and phase contrast CT imaging systems. An example of a CT imaging system that may be used to generate the CT data 110 that is received in the operation S110, is the CT imaging system 220 illustrated in Fig. 2. By way of an example, the CT data 110 may be generated by the CT 5000 Ingenuity CT scanner that is marketed by Philips Healthcare, Best, The Netherlands.

As mentioned above, the CT data 110 that is received in the operation S110 may alternatively be generated by rotating, or stepping the X-ray source and X-ray detector of an X-ray projection imaging system around an anatomical region. An X-ray projection imaging system may include a support arm such as a so-called "C-arm" that supports an X-ray source and an X-ray detector. X-ray projection imaging systems may alternatively include a support arm with a different shape to this example, such as an O-arm, for example. Other types of X-ray projection imaging systems may alternatively be used wherein the X-ray source and the X-ray detector are mounted, or supported, in a different manner. In contrast to a CT imaging system, an X-ray projection imaging system typically generates X-ray attenuation data for an anatomical region with the X-ray source and X-ray detector in a static position with respect to the anatomical region. The X-ray attenuation data may be referred-to as projection data, in contrast to the volumetric data that is generated by a CT imaging system. The X-ray attenuation data that is generated by an X-ray projection imaging system is typically used to generate a 2D image of the anatomical region. However, an X-ray projection imaging system may generate CT data, i.e. volumetric data, by rotating, or stepping, its X-ray source and X-ray detector around an anatomical region and acquiring projection data for the anatomical region from multiple rotational angles with respect to the anatomical region. Image reconstruction techniques may then be used to reconstruct the projection data that is obtained from the multiple rotational angles into a volumetric image in a similar manner to the reconstruction of a volumetric image using X-ray attenuation data that is acquired from a CT imaging system. Thus, the CT data 110 that is received in the operation S110, may be generated by a CT imaging system, or alternatively, it may be generated by an X-ray projection imaging system. An example of an X-ray projection imaging system that may be used to generate the CT data 110, is the Azurion 7 X-ray projection imaging system that is marketed by Philips Healthcare, Best, The Netherlands.

In some examples that are described in more detail below, the CT data 110 that is received in the operation S110 is spectral CT data. Spectral CT data defines X-ray attenuation in an anatomical region within each of a plurality of different energy intervals DE_{1..m}. In general there may be two or more energy intervals; i.e. *m* is an integer, and *m* ≥ 2. In this regard, the spectral CT data 110 that is received in the operation S110 may be generated by a spectral CT imaging system, or by a spectral X-ray projection imaging system. In the latter case, the spectral CT data may be acquired by rotating, or stepping the X-ray source and X-ray detector of the spectral X-ray projection imaging system around the anatomical region, as described above. More generally, spectral CT data that is received in the operation S110 may be generated by a spectral X-ray imaging system.

The ability to generate X-ray attenuation data at multiple different energy intervals distinguishes a spectral X-ray imaging system from a conventional X-ray imaging system. By processing the data from the multiple different energy intervals, a distinction can be made between media that have similar X-ray attenuation values when measured within a single energy interval, and which would be indistinguishable in conventional X-ray attenuation data. Examples of spectral X-ray imaging systems that may be used to generate the spectral CT data 110 include cone beam spectral X-ray imaging systems, photon counting spectral X-ray imaging systems, dark-field spectral X-ray imaging systems, and phase contrast spectral X-ray imaging systems. An example of a spectral CT imaging system that may be used to generate spectral CT data is the Spectral CT 7500 that is marketed by Philips Healthcare, Best, The Netherlands.

In general, spectral CT data 110 may be generated by various different configurations of spectral X-ray imaging systems that include an X-ray source and an X-ray detector. For instance, the X-ray source of a spectral X-ray imaging system may include multiple monochromatic sources, or one or more polychromatic sources, and the X-ray detector of a spectral X-ray imaging system may include: a common detector for detecting multiple different X-ray energy intervals, or multiple detectors wherein each detector detects a different X-ray energy interval DE_{1..m}, or a multi-layer detector in which X-rays having energies within different X-ray energy intervals are detected by corresponding layers, or a photon counting detector that bins detected X-ray photons into one of multiple energy intervals based on their individual energies. Other combinations of the aforementioned X-ray sources and detectors may also be used to provide the spectral CT data 110. For example, in one configuration, X-ray source-detector pairs are mounted to a gantry at rotationally-offset positions around an axis of rotation. In this configuration, each source-detector pair operates independently, obviating the need to sequentially switch different X-ray sources emitting X-rays at different energy intervals.

In general, the CT data 110 that is received in the operation S110 may be received via any form of data communication, including wired, optical, and wireless communication. By way of some examples, when wired or optical communication is used, the communication may take place via signals transmitted on an electrical or optical cable, and when wireless communication is used, the communication may for example be via RF or optical signals. The CT data 110 that is received in the operation S110 may be received from various sources. For example, the CT data 110 may be received from an imaging system, such as one of the imaging systems described above. Alternatively, the CT data 110 may be received from another source, such as a computer readable storage medium, the Internet, or the Cloud, for example.

Referring now to the operation S120 illustrated in Fig. 2; in this operation, first and second image representations 130₁, 130₂, corresponding to respective first and second portions 120₁, 120₂ of the anatomical region 120, are generated from the CT data 110. The first and the second image representations 130₁, 130₂, comprise an overlap region 130₁₋₂.

As mentioned above, the CT data 110 may be acquired from different positions of an imaging system with respect to an anatomical region. The CT data 110 may be acquired during a step-and-shoot imaging procedure, or during a helical CT imaging procedure, for example. In this case, the CT data comprises: a first dataset acquired during a first step 150₁ of the imaging procedure, the first dataset representing the first portion 120₁ of the anatomical region 120; and a second dataset acquired during a second step 150₂ of the imaging procedure, the second dataset representing the second portion 120₂ of the anatomical region 120.

An example of the acquisition of CT data in accordance with a step-and-shoot imaging procedure was described above with reference to Fig. 3 for the situation in which there are two steps. In general, a step-and-shoot imaging procedure may include two or more steps. If there are more than two steps, CT data for these further steps may be acquired in the same manner as described above.

In the operation S120, the first and second image representations 130₁, 130₂ corresponding to the respective first and second portions of the anatomical region, are generated from the CT data 110. In the step-and-shoot imaging procedure described above, the first and second image representations 130₁, and 130₂, are generated from the first and second datasets, respectively. The image representations may be generated from the CT data using known image reconstruction techniques. Further image representations corresponding to any further steps may likewise be generated from the CT data acquired during these further steps in the same manner.

Referring now to the operation S130 illustrated in Fig. 1; in this operation, the first and the second image representations 130₁, 130₂, are mutually registered based on corresponding image features 140, 140' within the overlap region 130₁₋₂ to provide a combined image representation 130^{C} of the anatomical region 120. The registration that is performed in the operation S130 includes relaxing a registration constraint between the first and second image representations 130₁, 130₂, within a portion of the overlap region corresponding to an image artifact 130^{A}₁₋₂.

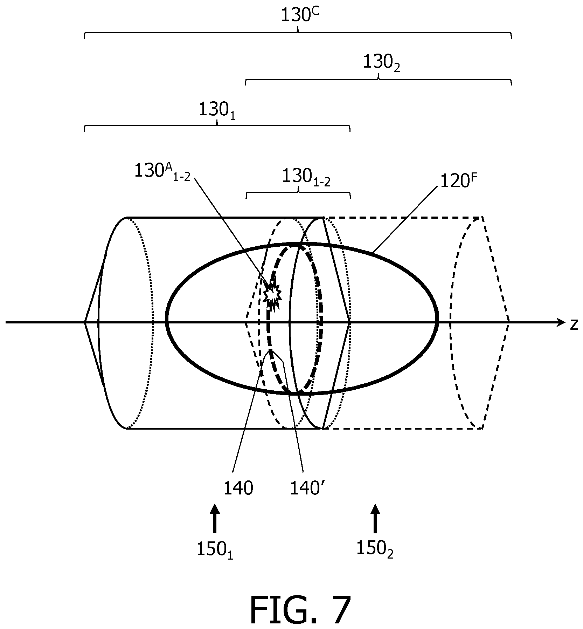

An example of the mutual registration operation that is performed in the operation S130 is now described with reference to Fig. 7, which is a schematic diagram illustrating first and second image representations 130₁, 130₂, corresponding to respective first and second portions of an anatomical region, and an overlap region 130₁₋₂ including an image artifact 130^{A}₁₋₂, in accordance with some aspects of the present disclosure. In the example illustrated in Fig. 7, CT data is acquired during a step-and-shoot imaging procedure such as that illustrated in Fig. 3. The CT data includes a first dataset that is acquired during a first step 150₁ of the step-and-shoot imaging procedure, and a second dataset that is acquired during a second step 150₂ of the step-and-shoot imaging procedure. With reference to Fig. 3, the first dataset represents the first portion 120₁ of the anatomical region 120, and the second dataset represents the second portion 120₂ of the anatomical region 120. The first and second image representations 130₁ and 130₂ illustrated in Fig. 7 are then generated from the first and second datasets, respectively. These image representations may be generated using the image reconstruction techniques described above.

In the example illustrated in Fig. 7, the first and the second image representations 130₁, 130₂ include an overlap region 130₁₋₂. This overlap region represents the overlap region 120₁₋₂ of the anatomical region illustrated in Fig. 3. In the example illustrated in Fig. 7, the anatomical region includes an ovate structure 120^{F}. Within the overlap region 130₁₋₂, there is a portion of the ovate structure 120^{F} that is common to both the first image representation 130₁ and the second image representation 130₂. This portion of the ovate structure 120^{F} is represented via the image features 140, and 140', respectively. In the example illustrated in Fig. 7, the portion of the ovate structure 120^{F} that is common to both the first and the second image representations 130₁, and 130₂, is a section through the ovate structure 120^{F}. In the operation S130, corresponding image features 140, 140' within the overlap region 130₁₋₂ are used to mutually register the first and the second image representations 130₁, 130₂ in order to provide a combined image representation 130^{C} of the anatomical region 120. Thus, with reference to Fig. 7, this amounts to using the image features 140, and 140', and which represent the same portion of the anatomical structure, i.e. the section through the ovate structure 120^{F}, to mutually registering the first and the second image representations 130₁, 130₂, and thereby provide the combined image representation 130^{C}.

In general, the mutual registration operation S130 may include applying one or more registration constraints to corresponding image features 140, 140' in the first and the second image representations 130₁, 130₂ within the overlap region 130₁₋₂. This registration may be performed using various known elastic and/or rigid image registration techniques. In an example, the registration may be confined to the overlap region 130₁₋₂ of the first and the second image representations 130₁, 130₂ by applying an overlap mask to the first and the second image representations 130₁, 130₂ and selectively performing the registration within the portions of the image representations defined by the overlap mask, the overlap mask corresponding to the overlap region.

As mentioned above, the mutual registration performed in the operation S130, includes relaxing a registration constraint between the first and second image representations 130₁, 130₂ within a portion of the overlap region corresponding to an image artifact 130^{A}₁₋₂.

Some examples of the operation of relaxing of a registration constraint are described below. In general, the operation of relaxing of a registration constraint encompasses from reducing of a registration constraint, to not applying any registration constraint at all, within the portion of the overlap region corresponding to the image artifact 130^{A}₁₋₂. It is noted that the image artifact 130^{A}₁₋₂ may occur in both the first and second image representations 130₁, 130₂, or it may only occur in one of the image representations. In the former situation, the registration constraint may be relaxed based on its extent in each image representation. In the latter situation, the shape of the image artifact in the image representation in which it occurs, may be mapped to the corresponding location within the overlap region of the other image representation, and then the registration constraint may likewise be relaxed within the extent of the image artifact in both image representations.

An example of an image artifact 130^{A}₁₋₂ is illustrated in the overlap region 130₁₋₂ in Fig. 7. The image artifact 130^{A}₁₋₂ may originate from the presence of objects that are formed from dense materials such as metal, or bone, in the anatomical region, motion of the anatomical region over the period in which the CT data is acquired, cone beam artifacts, beam hardening artefacts, and also other factors. The image artifact may originate from the presence of a metal object such as the artificial cardiac valve, the wire stitches, or the cardiac pacemaker illustrated in Fig. 4 - Fig. 6, for example. In some examples, the image artifact comprises: an artifact originating from an object in the overlap region 130₁₋₂ such as a metal object artifact originating from a metal object in the overlap region 130₁₋₂, or a motion artifact, or a cone beam artifact, or a beam hardening artefact.

As mentioned above, in one example, the operation of relaxing a registration constraint comprises placing no requirement on registering the first and second image representations 130₁, 130₂ within the portion of the overlap region 130₁₋₂ corresponding to the image artifact 130^{A}₁₋₂. This operation may be implemented by excluding from the overlap mask described above, image regions, or voxels, corresponding to the image artifact 130^{A}₁₋₂.

In other examples, the operation of relaxing a registration constraint comprises placing a reduced requirement on registering the first and second image representations 130₁, 130₂ within the portion of the overlap region 130₁₋₂ corresponding to the image artifact 130^{A}₁₋₂.

In one group of examples, the registration constraint is relaxed by adjusting image intensity values in the first and second image representations, i.e. in the volumetric image domain. In this group of examples, the method includes replacing, with default, or interpolated, intensity values, voxels in the first and second image representations 130₁, 130₂ corresponding to the image artifact, such that the mutually registering S130 comprises relaxing the registration constraint between the first and second image representations 130₁, 130₂ within the portion of the overlap region corresponding to the image artifact 130^{A}₁₋₂.

In these examples, the intensity values of the voxels corresponding to the image artifact may be replaced with default intensity values. The default intensity values may be similar to, e.g. an average of, the intensity values of voxels outside the image artifact. The effect of this is to relax the registration constraint between the first and second image representations 130₁, 130₂ within the portion of the overlap region corresponding to the image artifact 130^{A}₁₋₂. In other words, it places reduced emphasis on registering the voxels corresponding to the image artifact. The intensity values of these voxels may be adjusted in the overlap mask described above.

Instead of replacing the intensity values of the voxels corresponding to the image artifact with default intensity values, the intensity values of these voxels may be replaced with interpolated intensity values. For example, interpolated intensity values for the voxels within a volume corresponding to the image artifact may be calculated based on the intensity values of the voxels surrounding the volume corresponding to the image artifact. This likewise has the effect of relaxing the registration constraint between the first and second image representations 130₁, 130₂ within the portion of the overlap region corresponding to the image artifact 130^{A}₁₋₂. The intensity values of these voxels may be adjusted in the overlap mask described above.

In another group of examples, the registration constraint is relaxed by adjusting intensity values in the CT projection data, i.e. in the projection domain. In this group of examples, the CT data 110 comprises a first projection dataset representing the first portion 120₁ of the anatomical region 120, and a second projection dataset representing the second portion 120₂ of the anatomical region 120; and the method comprises:
replacing, with default or interpolated, intensity values, intensity values in the first and second projection datasets corresponding to the image artifact; and
reconstructing the first and second projection datasets to provide the respective first and second image representations 130₁, 130₂ wherein the intensity values of voxels corresponding to the image artifact are defined by the default, or interpolated, intensity values;
such that the mutually registering S130 comprises relaxing the registration constraint between the first and second image representations 130₁, 130₂ within the portion of the overlap region corresponding to the image artifact 130^{A}₁₋₂.

In these examples, the intensity values in the projection datasets that correspond to the image artifact may be replaced with default intensity values. The default intensity values may be similar to, e.g. an average of, the intensity value of pixels that are outside the image artifact. Again, the consequence of this is that, when the mutual registration is performed using the subsequently-reconstructed projection datasets, the registration constraint is relaxed between the first and second image representations 130₁, 130₂ within the portion of the overlap region corresponding to the image artifact 130^{A}₁₋₂. In other words, it places reduced emphasis on registering the voxels corresponding to the image artifact.

Instead of replacing the intensity values in the projection datasets that correspond to the image artifact with default intensity values, these intensity values may be replaced with interpolated intensity values. For example, interpolated intensity values for pixels within an area corresponding to the image artifact may be calculated based on the intensity values of the pixels surrounding the image artifact. This likewise has the effect of relaxing the registration constraint between the first and second image representations 130₁, 130₂ that are performed using the subsequently-reconstructed projection datasets, within the portion of the overlap region corresponding to the image artifact 130^{A}₁₋₂.

In the examples described above, the method illustrated in Fig. 1 may also include an operation of analyzing the first and second image representations 130₁, 130₂ to identify the image artifact within the overlap region 130^{A}₁₋₂.

Various techniques may be used to identify the image artifact. For example, the operation of analyzing the first and second image representations 130₁, 130₂ to identify the image artifact within the overlap region 130^{A}₁₋₂ may include one or more of:
applying an intensity threshold to the first and second image representations 130₁, 130₂ to identify the image artifact;
segmenting the first and second image representations 130₁, 130₂ to identify the image artifact;
applying an object template to the first and second image representations 130₁, 130₂ to identify an image artifact associated with the object;
inputting the first and second image representations 130₁, 130₂ into a neural network trained to identify the image artifact; an
inputting the first and second image representations 130₁, 130₂ into a neural network trained to predict an expected location of the image artifact, and identifying the image artifact based on the expected location.

Some image artifacts appear as anomalous image intensities. Thus, in some instances, the image artifact may be identified by applying an intensity threshold to the first and second image representations 130₁, 130₂. For instance, metal artifacts may be detected by applying a threshold to the projection data intensity values, or to the reconstructed image intensity values. A similar thresholding approach may be used to identify metal artifacts in the projection domain.

In some instances, image artifacts may be identified by segmenting the first and second image representations 130₁, 130₂. Various (model based) segmentation techniques may be used for this purpose. The segmentation may be used to identify characteristic shapes of image artifacts, for example.

In some instances, an object template may be applied to the first and second image representations 130₁, 130₂ to identify an image artifact associated with the object. For instance, if the image representations are known to include an object such as a bone, a pacemaker, a stitch, and so forth, a template representing the object may be matched to the image representations and used to identify metal artifacts via anomalous image intensities around the template. A template may similarly be used to identify motion artifacts by using a template to model a motion of an object, matching the template to the image representations, and identifying motion artifacts via anomalous intensities surrounding the template. For example, a template representing the expected motion of a coronary artery may be matched to a coronary artery and used to identify motion artifacts via anomalous image intensities surrounding the template.

Various neural networks may be trained in order to identify image artifacts such as metal artifacts, motion artifacts, cone beam artifacts, and beam hardening artefacts, in the first and second image representations 130₁, 130₂. The neural networks may be trained using training data that includes images that are representative of the anatomical region and wherein the image artifacts have been labelled. An example of a technique for identifying motion artifacts using a trained neural network is described in the document "Motion artifact recognition and quantification in coronary CT angiography using convolutional neural networks", Lossau, T., et al., Medical Image Analysis 52 (2019) 68-79.

Various neural networks may similarly be trained to predict an expected location of the image artifact. Metal artifacts, often occur between metallic objects. A neural network may therefore be trained to identify the expected locations of metal artifacts. Having identified the expected location of such metal artifacts, the extent of the artifact may be determined, e.g. using a further neural network as described above, or alternatively using the thresholding approach described above, or the image segmentation technique described above.

Referring now to the operation S140 illustrated in Fig. 2; in this operation the combined image representation 130^{C} is outputted. The combined image representation 130^{C} may be outputted in various ways, including to a display device such as a monitor, or to a virtual/ augmented reality display device, or to a printer, or to a computer-readable storage medium, or to the Internet, or to the Cloud, and so forth.

The examples below describe one or more further operations may be performed in the computer-implemented method illustrated in Fig. 1.

In one example, a registration constraint is relaxed for both an object as well as its associated image artifact. In this example, the image artifact comprises an artifact originating from an object within the overlap region 130₁₋₂, and the mutually registering operation S130 includes relaxing a registration constraint between the first and second image representations 130₁, 130₂ within a portion of the overlap region 130₁₋₂ corresponding to the object.

In this example, the object may be an anatomical object, such as a bone, or it may be an implanted object, such as an artificial cardiac valve, a wire stitch, or a cardiac pacemaker. Relaxing the registration constraint for the object reduces the impact on the combined image representation of differences in the appearance of the object in the first and second image representations.

In another example, a degree of correspondence between a motion of an object and a motion of a region of interest in the first and second image representations, is used to determine whether or not to use the object to mutually register the first and second image representations 130₁, 130₂. The inventors have observed variations in the reliability of objects that are used to mutually register images in step-and-shoot imaging procedures. For some types of objects there is a relatively higher degree of correspondence between the motion of the object and the motion of the region of interest. These objects typically provide a reliable registration because motion-induced changes in the anatomical region between the acquisition of the images are compensated-for by the registration. For instance, the motion of a pacemaker lead tends to have a relatively higher degree of correspondence with the motion of the heart. Consequently, image features that represent a pacemaker lead can be used to mutually register the first and second image representations 130₁, and 130₂ in a reliable manner. By contrast, for some other types of objects there is a relatively lower degree of correspondence between the motion of the object and the motion of the region of interest. These objects typically provide a less-reliable registration because motion-induced changes in the anatomical region between the acquisition of the images are not compensated-for by the registration. For instance, the motion of an artificial cardiac valve tends to have a relatively lower degree of correspondence with the motion of heart. Consequently, image features that represent a cardiac valve typically result in a less reliable mutual registration of the first and second image representations 130₁, 130₂.

In this example, the anatomical region 120 comprises a region of interest and at least one object, and the method described with reference to Fig. 1 includes:
identifying corresponding portions of the at least one object in the first and second image representations 130₁, 130₂ within the overlap region 130₁₋₂;
determining a degree of correspondence between a motion of the at least one object and a motion of the region of interest; and
wherein the mutually registering S130 is performed based further on the corresponding portions of the at least one object if the motion of the at least one object and the motion of the region of interest have a relatively higher degree of correspondence, and wherein the mutually registering S130 is performed without registering the corresponding portions of the at least one object if the motion of the at least one object and the motion of the region of interest have a relatively lower degree of correspondence.

In this example, the object may be an anatomical object, such as a bone, or it may be an implanted object, such as an artificial cardiac valve, a wire stitch, or a cardiac pacemaker. The region of interest may be an anatomical region of interest, such as a portion of an organ such the heart, or the lung, and so forth. The operation of identifying corresponding portions of the object may be performed by using various (model-based) segmentation techniques. Image comparison techniques to match the identified portions of the object to one another. The operation of determining a degree of correspondence between a motion of the at least one object and a motion of the region of interest may be performed using various techniques, including classification techniques, and by using a look-up table. For instance, the object may be identified using image processing techniques (e.g. a neural network), and a classification technique, which may be provided by the same neural network, may be used to label the object with the degree of correspondence. The neural network may be trained using annotated training data that specifies the expected degree of correspondence for different types of objects. Alternatively, a look-up table may be used wherein the look-up table stores a record of the degree of correspondence between different objects and different regions of interest. Based on the result of the classification, or the result of inspecting the look-up table, it may then be decided whether or not to use the corresponding portions of the object to mutually register the first and the second image representations 130₁, 130₂. In the latter case, the corresponding portions of the object may be omitted from the registration by excluding from the overlap mask described above, image regions, or voxels, corresponding to these portions of the object.

In another example, the operation of relaxing a registration constraint is performed contingent on a size of the image artifact being below a threshold value.

The inventors have observed that if the size of the image artifact is too large, then the operation of relaxing the registration constraint between the first and second image representations 130₁, 130₂ within the portion of the overlap region corresponding to the image artifact 130^{A}₁₋₂, might result in a remaining volume within the overlap region 130₁₋₂ that is too small to perform a reliable image registration. In such situations it may be better to perform the image registration using the image artifact, rather than omitting it and risking that the relaxation of the registration constraint results in an even worse image quality. In this example, the threshold value may be set empirically. By way of some examples, the threshold value may be set to a value such as 10%, or 20%, or 30%, or 40%, or 50%, or 60%, or 70%, or 80 %, or 90% of the overlap region 130₁₋₂.

In another example, a computer program product is provided. The computer program product comprises instructions which when executed by one or more processors 210, cause the one or more processors to carry out a method of providing an image representation of an anatomical region. The method comprises:
receiving S110 CT data 110 representing the anatomical region 120;
generating S120, from the CT data 110, first and second image representations 130₁, 130₂ corresponding to respective first and second portions 120₁, 120₂ of the anatomical region 120, wherein the first and the second image representations 130₁, 130₂ comprise an overlap region 130₁₋₂;
mutually registering S130 the first and the second image representations 130₁, 130₂ based on corresponding image features 140, 140' within the overlap region 130₁₋₂ to provide a combined image representation 130^{C} of the anatomical region 120; and
outputting S140 the combined image representation 130'; and
wherein the mutually registering S130 comprises relaxing a registration constraint between the first and second image representations 130₁, 130₂ within a portion of the overlap region corresponding to an image artifact 130^{A}₁₋₂.

In another example, a system 200 for providing an image representation of an anatomical region, is provided. The system comprises one or more processors 210 configured to:
receive S110 CT data 110 representing the anatomical region 120;
generate S120, from the CT data 110, first and second image representations 130₁, 130₂ corresponding to respective first and second portions 120₁, 120₂ of the anatomical region 120, wherein the first and the second image representations 130₁, 130₂ comprise an overlap region 130₁₋₂;
mutually register S130 the first and the second image representations 130₁, 130₂ based on corresponding image features 140, 140' within the overlap region 130₁₋₂ to provide a combined image representation 130^{C} of the anatomical region 120; and
output S140 the combined image representation 130^{C}; and
wherein the mutually registering S130 comprises relaxing a registration constraint between the first and second image representations 130₁, 130₂ within a portion of the overlap region corresponding to an image artifact 130^{A}₁₋₂.

An example of the system 200 is illustrated in Fig. 2. It is noted that in addition to the one or more processors 210, the system 200 may also include one or more of: an imaging system for providing the CT data 110, such as for example the CT imaging system 220 illustrated in Fig. 2; a patient bed 230, the patient bed 230; a display device, such as a monitor (not illustrated in Fig. 2), for displaying combined image representation 130^{C}, other outputs generated by the one or more processors 210, and so forth; and a user input device (not illustrated in Fig. 2) configured to receive user input in relation to the operations performed by the one or more processors 210, such as a keyboard, a mouse, a touchscreen, and so forth. In the system 200, the imaging system 220, or the patient bed 230, may be controlled by the one or more processors 210 so as to provide multiple positions of the imaging system with respect to an anatomical region for acquiring the CT data 110, e.g. in accordance with a step-and-shoot imaging procedure.

The above examples are to be understood as illustrative of the present disclosure, and not restrictive. Further examples are also contemplated. For instance, the examples described in relation to a computer-implemented method, may also be provided by the computer program product, or by the computer-readable storage medium, or by the system 200, in a corresponding manner. It is to be understood that a feature described in relation to any one example may be used alone, or in combination with other described features, and may be used in combination with one or more features of another of the examples, or a combination of other examples. Furthermore, equivalents and modifications not described above may also be employed without departing from the scope of the invention, which is defined in the accompanying claims. In the claims, the word "comprising" does not exclude other elements or operations, and the indefinite article "a" or "an" does not exclude a plurality. The mere fact that certain features are recited in mutually different dependent claims does not indicate that a combination of these features cannot be used to advantage. Any reference signs in the claims should not be construed as limiting their scope.

## Claims

1. A computer-implemented method of providing an image representation of an anatomical region, the method comprising:
receiving (S110) CT data (110) representing the anatomical region (120);
generating (S120), from the CT data (110), first and second image representations (130₁, 130₂) corresponding to respective first and second portions (120₁, 120₂) of the anatomical region (120), wherein the first and the second image representations (130₁, 130₂) comprise an overlap region (130₁₋₂);
mutually registering (S130) the first and the second image representations (130₁, 130₂) based on corresponding image features (140, 140') within the overlap region (130₁₋₂) to provide a combined image representation (130^{C}) of the anatomical region (120); and
outputting (S140) the combined image representation (130^{C}); and
wherein the mutually registering (S130) comprises relaxing a registration constraint between the first and second image representations (130₁, 130₂) within a portion of the overlap region corresponding to an image artifact (130^{A}₁₋₂).

2. The computer-implemented method according to claim 1, wherein the image artifact comprises an artifact originating from an object within the overlap region (130₁₋₂); and
wherein the mutually registering (S130) further comprises relaxing a registration constraint between the first and second image representations (130₁, 130₂) within a portion of the overlap region (130₁₋₂) corresponding to the object.

3. The computer-implemented method according to claim 1, wherein the relaxing the registration constraint comprises placing no requirement on registering the first and second image representations (130₁, 130₂) within the portion of the overlap region (130₁₋₂) corresponding to the image artifact (130^{A}₁₋₂).

4. The computer-implemented method according to claim 1, wherein the method further comprises replacing, with default, or interpolated, intensity values, voxels in the first and second image representations (130₁, 130₂) corresponding to the image artifact, such that the mutually registering (S130) comprises relaxing the registration constraint between the first and second image representations (130₁, 130₂) within the portion of the overlap region corresponding to the image artifact (130^{A}₁₋₂).

5. The computer-implemented method according to claim 1, wherein the CT data (110) comprises a first projection dataset representing the first portion (120₁) of the anatomical region (120), and a second projection dataset representing the second portion (120z) of the anatomical region (120); and wherein the method further comprises:
replacing, with default or interpolated, intensity values, intensity values in the first and second projection datasets corresponding to the image artifact; and
reconstructing the first and second projection datasets to provide the respective first and second image representations (130₁, 130₂) wherein the intensity values of voxels corresponding to the image artifact are defined by the default, or interpolated, intensity values;
such that the mutually registering (S130) comprises relaxing the registration constraint between the first and second image representations (130₁, 130₂) within the portion of the overlap region corresponding to the image artifact (130^{A}₁₋₂).

6. The computer-implemented method according to claim 1, wherein the anatomical region (120) comprises a region of interest and at least one object, and wherein the method further comprises:
identifying corresponding portions of the at least one object in the first and second image representations (130₁, 130₂) within the overlap region (130₁₋₂);
determining a degree of correspondence between a motion of the at least one object and a motion of the region of interest; and
wherein the mutually registering (S130) is performed based further on the corresponding portions of the at least one object if the motion of the at least one object and the motion of the region of interest have a relatively higher degree of correspondence, and wherein the mutually registering (S130) is performed without registering the corresponding portions of the at least one object if the motion of the at least one object and the motion of the region of interest have a relatively lower degree of correspondence.

7. The computer-implemented method according to any previous claim, wherein the relaxing a registration constraint is performed contingent on a size of the image artifact being below a threshold value.

8. The computer-implemented method according to any previous claim, wherein the mutually registering (S130) comprises applying one or more registration constraints to corresponding image features (140, 140') in the first and the second image representations (130₁, 130₂) within the overlap region (130₁₋₂).

9. The computer-implemented method according to any previous claim, wherein the method further comprises:
analyzing the first and second image representations (130₁, 130₂) to identify the image artifact within the overlap region (130^{A}₁₋₂).

10. The computer-implemented method according to claim 9, wherein the analyzing comprises one or more of:
applying an intensity threshold to the first and second image representations (130₁, 130₂) to identify the image artifact;
segmenting the first and second image representations (130₁, 130₂) to identify the image artifact;
applying an object template to the first and second image representations (130₁, 130₂) to identify an image artifact associated with the object;
inputting the first and second image representations (130₁, 130₂) into a neural network trained to identify the image artifact; and
inputting the first and second image representations (130₁, 130₂) into a neural network trained to predict an expected location of the image artifact, and identifying the image artifact based on the expected location.

11. The computer-implemented method according to any previous claim, wherein the CT data (110) is acquired during a step-and-shoot imaging procedure, or during a helical CT imaging procedure, and wherein the CT data comprises:
a first dataset acquired during a first step (150₁) of the imaging procedure, the first dataset representing the first portion (120₁) of the anatomical region (120); and
a second dataset acquired during a second step (150₂) of the imaging procedure, the second dataset representing the second portion (120z) of the anatomical region (120); and
wherein the generating (S120), comprises generating the first and second image representations (130₁, 130₂) from the first and second datasets, respectively.

12. The computer-implemented method according to any previous claim, wherein the image artifact comprises: an artifact originating from an object in the overlap region (130₁₋₂) such as a metal object artifact originating from a metal object in the overlap region (130₁₋₂), or a motion artifact, or a cone beam artifact, or a beam hardening artefact.

13. The computer-implemented method according to any previous claim, wherein the anatomical region (120) comprises at least a portion of a heart, or at least a portion of a lung.

14. A computer program product comprising instructions which when executed by one or more processors (210), cause the one or more processors to carry out the method according to any one of claims 1 - 13.

15. A system (200) for providing an image representation of an anatomical region, the system comprising one or more processors (210) configured to:
receive (S110) CT data (110) representing the anatomical region (120);
generate (S120), from the CT data (110), first and second image representations (130₁, 130₂) corresponding to respective first and second portions (120₁, 120₂) of the anatomical region (120), wherein the first and the second image representations (130₁, 130₂) comprise an overlap region (130₁₋₂);
mutually register (S130) the first and the second image representations (130₁, 130₂) based on corresponding image features (140, 140') within the overlap region (130₁₋₂) to provide a combined image representation (130^{C}) of the anatomical region (120); and
output (S140) the combined image representation (130^{C}); and
wherein the mutually registering (S130) comprises relaxing a registration constraint between the first and second image representations (130₁, 130₂) within a portion of the overlap region corresponding to an image artifact (130^{A}₁₋₂).
